# EUROPEAN PATENT SPECIFICATION

(11) **EP 3 159 201 B1**
(45) Date of publication and mention of the grant of the patent: **21.10.2020**
(21) Application number: 16195126.4
(22) Date of filing: 21.10.2016
(51) Int. Cl.: B60K 11/02, B60K 11/08, B60K 11/04, B60K 13/02, F01P 11/02

(54) **INTEGRATED INTAKE AND DEAERATION ASSEMBLY FOR A WORK VEHICLE**
INTEGRIERTE EINLASS- UND ENTLÜFTUNGSANORDNUNG FÜR EIN NUTZFAHRZEUG
ENSEMBLE INTÉGRÉ D'ADMISSION ET D'ÉVACUATION D'AIR POUR UN VÉHICULE DE TRAVAIL

(30) Priority: 23.10.2015 US 201514921783
(43) Date of publication of application: 26.04.2017
(73) Proprietor: CNH Industrial Italia S.p.A., 10135 Torino (IT)
(72) Inventor: Morey, Daniel Alan, Mundelein, Illinois 60060 (US)
(74) Representative: CNH Industrial IP Department

(56) References cited:
- EP-A2- 1 607 616
- US-A1- 2002 071 571
- US-B1- 6 247 442
- US-B1- 7 191 739

## Description

### BACKGROUND

The present disclosure relates generally to an air intake system and a cooling system for an engine of a work vehicle, and more specifically, to an integrated intake and deaeration assembly for a work vehicle.

Off-road vehicles, such as trucks, tractors, combines, and other vehicles for use in various construction or agricultural applications, have limited space for the numerous components that may be included under the hood of the off-road vehicle. For example, an off-road vehicle may include an engine, a radiator, a pump, a thermostat, a deaerator, an air intake, an exhaust system, a braking system, a battery, and various electronic components disposed under the hood of the off-road vehicle. Unfortunately, the components of the off-road vehicle may be expensive as well as consume relatively large amounts of space under the hood. EP1607616 relates to arrangement of vehicle components within an engine compartment, and in particular to an integrated air box, washer reservoir and acoustic resonator unit. US6247442 relates to snowmobiles, and, in particular, to a combined air box, coolant reservoir and oil tank for snowmobiles.

### BRIEF DESCRIPTION

The present invention relates to an integrated intake and deaeration assembly, according to claim1, that includes a first compartment, a second compartment, and a shared wall.

The shared wall separates the first compartment from the second compartment, the first compartment is configured to direct a flow of air to an engine of a work vehicle, and the second compartment is configured to deaerate a coolant fluid configured to flow through the engine and a radiator of the work vehicle.

### DRAWINGS

These and other features, aspects, and advantages of the present disclosure will become better understood when the following detailed description is read with reference to the accompanying drawings in which like characters represent like parts throughout the drawings, wherein:
FIG. 1 is a perspective view of an embodiment of an off-road vehicle that may include an integrated intake and deaeration assembly, in accordance with an aspect of the present disclosure;
FIG. 2 is a block diagram of an embodiment of an air intake system and a coolant system that includes an integrated intake and deaeration assembly and that may be utilized in the off-road vehicle of FIG. 1, in accordance with an aspect of the present disclosure;
FIG. 3 is an exploded perspective view of the integrated intake and deaeration assembly of FIG. 2, in accordance with an aspect of the present disclosure;
FIG. 4 is a cross-sectional perspective view of the integrated intake and deaeration assembly of FIGS. 2 and 3, in accordance with an aspect of the present disclosure; and
FIG. 5 is a flow diagram of an embodiment of a method for manufacturing the integrated intake and deaeration assembly of FIGS. 2-4.

### DETAILED DESCRIPTION

One or more specific embodiments of the present disclosure will be described below

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

The embodiments disclosed herein relate generally to an integrated intake and deaeration assembly for off-road vehicles. Off-road vehicles may employ a cooling system that may be utilized to maintain an engine at a desired temperature range during operation. In certain cases, the cooling system may include a radiator, a pump, a thermostat, and coolant fluid. The radiator is configured to facilitate heat transfer from the coolant fluid to air so that the coolant fluid may be received by the engine at a relatively low temperature. In turn, the coolant fluid may absorb thermal energy from the engine to maintain the engine at the desired temperature range. The coolant fluid may be driven through a coolant fluid loop (e.g., a flow path that includes the engine and the radiator) via the pump. Additionally, a flow rate of the coolant fluid may be controlled by the thermostat. In some cases, the thermostat may include a valve that opens and/or closes to adjust a flow rate of the coolant fluid through the engine and/or the radiator.

Additionally, the off-road vehicle may include an air intake system. The air-intake system may include an air filter, a flow sensor, and a throttle valve, for example. The air intake system may be utilized to direct air toward the combustion chamber of the engine. For example, the intake system may guide a desired amount of air from a surrounding environment of the off-road vehicle toward the combustion chamber of the engine. The air may be mixed with fuel such that a fuel-air mixture may combust in the engine and ultimately power the off-road vehicle.

In addition to the cooling system and the air intake system, the off-road vehicle may include numerous components under the hood. For example, the off-road vehicle may include an engine, various belts and gears, a braking system, a battery, a steering system, a transmission, and the like. However, an amount of space under the hood of the off-road vehicle is limited. Therefore, it is now recognized that it may be desirable to conserve space by integrating certain components. For instance, in traditional off-road vehicle configurations, an air intake duct may be separate from, and proximate to, a deaeration chamber. It is now recognized that integrating the air intake duct and the deaeration chamber may decrease a cumulative amount of space of the components (e.g., by eliminating empty space previously existing between the air intake duct and the deaeration chamber). Accordingly, the integrated air intake duct and deaeration chamber may include a complex geometry that may enable a manufacturer of the off-road vehicle to satisfy tight packaging constraints. Further, integrating the air intake duct and deaeration chamber may eliminate a device and/or hardware utilized to mount the deaeration chamber to the air intake duct.

Additionally, integrating the air intake duct and the deaeration chamber may reduce manufacturing costs by decreasing an amount of parts that are produced (e.g., manufacturing one component instead of two). Therefore, in certain embodiments, one mold (e.g., an injection mold template) may be utilized instead of two molds (e.g., injection mold templates) to manufacture both the air intake duct and the deaeration chamber. In other embodiments, two molds (e.g., injection mold templates) may be utilized instead of four molds (e.g., two injection mold templates for each of the air intake duct and the deaeration chamber). Accordingly, it is now recognized that an integrated intake and deaeration assembly may save space under the hood of the off-road vehicle, as well as reduce costs associated with manufacturing vehicle components.

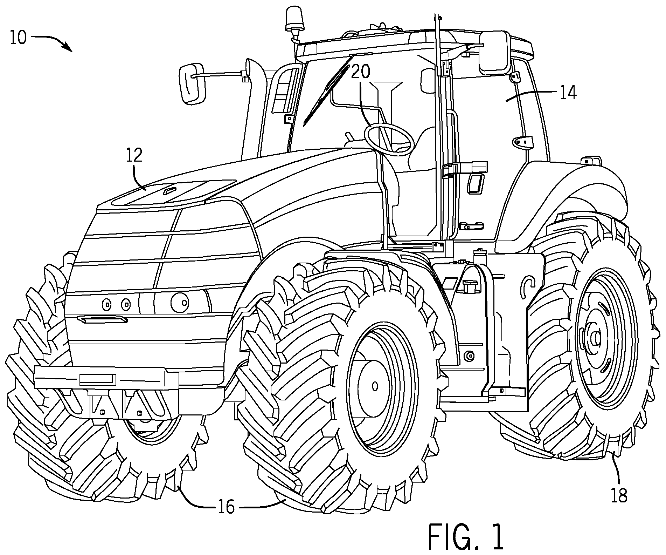

To help illustrate the manner in which the present embodiments may be used in a system, FIG. 1 is a perspective view of an embodiment of an off-road vehicle 10 (e.g., an agricultural vehicle or work vehicle) that may include the integrated intake and deaeration assembly. The off-road vehicle 10 may be a tractor, an off-road vehicle, a work vehicle, or any other suitable vehicle that utilizes a cooling system having a deaeration chamber and an air intake system. The off-road vehicle 10 has a body 12 that typically houses an engine, a cooling system, a transmission, and/or a power train. Furthermore, the off-road vehicle 10 has a cabin 14 where an operator may sit or stand to operate the off-road vehicle 10. The off-road vehicle 10 has two front wheels 16 and two rear wheels 18 that rotate to move the off-road vehicle 10. However, other embodiments may include any number of wheels or tracks to move the off-road vehicle 10. As illustrated, the off-road vehicle 10 is maneuvered using a steering wheel 20 configured to direct the off-road vehicle 10. In certain embodiments, the steering wheel 20 may turn the front wheels 16 (or the rear wheels 18) to control the steering of the off-road vehicle 10.

As discussed above, it may be desirable to integrate components that are traditionally placed under a hood of the off-road vehicle 10 to establish more space for additional features and/or components, as well as to reduce manufacturing costs. For example, the air intake duct and the deaeration chamber may be integrated (e.g., share a common wall) with one another to form a single component. The single component may substantially eliminate and/or reduce any gaps present between the air intake duct and the deaeration chamber, thereby reducing an amount of space occupied by the air intake duct and the deaeration chamber. Accordingly, in certain embodiments, establishing more space under the hood of the off-road vehicle 10 may enable the hood to be lowered such that an amount of drag experienced by the off-road vehicle 10 is reduced. Additionally, in certain embodiments, a single mold may be utilized to form the integrated component as opposed to utilizing two or more molds to form each component separately. In other embodiments, two molds may be utilized to form the integrated component as opposed to utilizing four or more molds to form each component separately (e.g., each component may be formed using two molds). Utilizing fewer molds may reduce costs for manufacturing the off-road vehicle 10 and integrating the components may improve performance of the off-road vehicle (e.g., by transferring heat between the coolant fluid and intake air). Accordingly, integrating the components into a single integrated intake and deaeration assembly may establish space for additional features to be incorporated into the off-road vehicle 10 as well as reduce manufacturing costs.

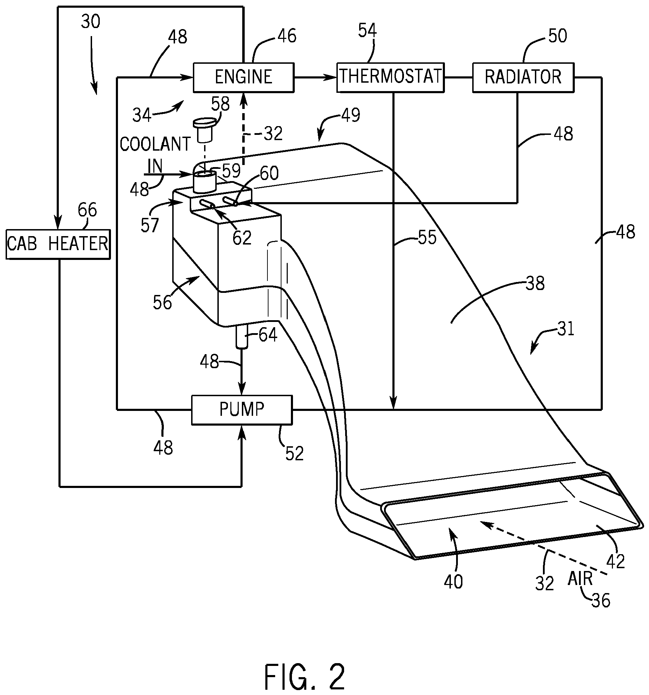

For example, FIG. 2 is a block diagram of a cooling system 30 and an air intake system 31 that may be utilized in the off-road vehicle 10. As shown in the illustrated embodiment of FIG. 2, the air intake system 31 may include an air flow path 32 and the cooling system 30 may include a coolant fluid loop 34. Air 36 may be directed along the air flow path 32 toward an integrated intake and deaeration assembly 38 via utilized vacuum created by the engine to move the air 36 along the air flow path 32. The air 36 flows through an air intake compartment 40 of the integrated intake and deaeration assembly 38. For example, the air intake compartment 40 may be configured to direct the air 36 from an inlet portion 42 of the air intake compartment 40 toward an outlet portion 44 of the air intake compartment 40. In certain embodiments, the air 36 may be received by an engine 46 (e.g., a combustion chamber of the engine 46) after exiting the outlet portion 44 of the air intake compartment 40.

Additionally, the integrated intake and deaeration assembly 38 may be configured to receive coolant 48 from the coolant fluid loop 34. As shown in the illustrated embodiment of FIG. 2, the coolant fluid loop 34 includes a radiator 50, a pump 52, a thermostat 54, and the engine 46. The radiator 50 functions as a heat exchanger that transfers thermal energy from coolant fluid 48 flowing through the coolant fluid loop 34 to the air, for example. Accordingly, the coolant fluid 48 flowing into the radiator 50 may have a higher temperature than the coolant fluid 48 flowing out of the radiator 50. The coolant fluid 48 exiting the radiator 50 is ultimately received by the engine 46 of the off-road vehicle 10 to reduce a temperature of the engine 46 such that the temperature of the engine 46 may be maintained within a desired range during operation.

The coolant fluid 48 is driven through the coolant fluid loop 34 via the pump 52. In the illustrated embodiment of FIG. 2, the pump 52 is located downstream of the radiator 50 and upstream of the engine 46. However, in other embodiments, the pump 52 may be positioned in any suitable location along the coolant fluid loop 34. The thermostat 54 may monitor a temperature of the engine 46 and/or the coolant fluid 48 and open and/or close a valve to direct the coolant fluid 48 toward the radiator 50 when the temperature of the engine 46 reaches a value outside of the desired temperature range. Accordingly, the radiator 50 may cool the coolant fluid 48 such that the coolant fluid 48 may absorb heat from the engine 46, thereby causing the engine 46 to reach a temperature value within the desired temperature range. For example, in certain embodiments, the thermostat 54 may be coupled to a thermocouple that measures a temperature of the engine 46. In other embodiments, the thermostat 54 may include a material that melts when the engine 46 reaches a temperature outside of the desired temperature range, such that the valve opens and drives the coolant fluid 48 into the radiator 50. Additionally, the thermostat may be configured to direct the coolant fluid 48 through a radiator bypass path 55 when the measured temperature value of the engine 46 is within the desired temperature range, thereby enhancing an efficiency of the cooling system 30.

In certain embodiments, the coolant fluid 48 may include air bubbles as a result of flowing through the radiator 50 and/or the engine 46 of the off-road vehicle 10. It may be desirable to substantially eliminate and/or reduce the air bubbles to enhance the efficiency of the pump. Accordingly, the coolant fluid 48 may be directed toward a deaeration compartment 56 (e.g., separated from the intake compartment 40) of the integrated intake and deaeration assembly 38. The deaeration compartment 56 may enable any air that may have been present in the coolant fluid 48 to separate from the coolant fluid and either be trapped in a top portion 57 of the deaeration compartment 56 or vented to atmosphere via a pressure relief valve 58.

In certain embodiments, the top portion 57 of the deaeration compartment 56 may also include an opening 59. The opening 59 may be utilized to add more coolant fluid 48 to the coolant fluid loop 34 and may be capped with the pressure relief valve 58. For example, in certain embodiments, the coolant fluid 48 may be water or a mixture of water and alcohol (e.g., methanol, ethylene glycol, propylene glycol, etc.). Accordingly, as the coolant fluid 48 absorbs thermal energy from the engine 46, a portion of the coolant fluid 48 may evaporate into vapor. As such, as the coolant fluid 48 enters the deaeration compartment 56, some vapor may separate from the liquid coolant fluid and exit the coolant fluid loop 34 via the pressure relief valve 58. Additional coolant fluid 48 may be periodically added to the coolant fluid loop 34 via the opening 59 to ensure that a suitable amount of coolant fluid 48 is present in the coolant fluid loop 34 during operation of the engine 46.

The deaeration compartment 56 also includes a first inlet port 60 and a second inlet port 62. The first and second inlet ports 60, 62 are configured to receive coolant fluid 48 into the deaeration compartment 56. The first inlet port 60 may enable coolant fluid 48 from the radiator 50 (e.g., exiting an inlet tank of the radiator 50) to enter the deaeration compartment 56. Similarly, the second inlet port 62 may receive coolant fluid 48 from the engine 46. When the coolant fluid 48 enters the deaeration compartment 56 air bubbles that may be present in the coolant fluid 48 may separate, thereby enhancing an efficiency of the cooling system 30.

As shown in the illustrated embodiment of FIG. 2, the deaeration compartment 56 also includes an outlet port 64. In certain embodiments, the coolant fluid 48 that collects in the deaeration compartment 56 flows through the outlet port 64 to the pump 52. The pump 52 receives the coolant fluid 48 (e.g., coolant fluid substantially free of air bubbles) and directs the coolant fluid 48 toward the engine 46 (e.g., when the thermostat valve is open). The coolant fluid 48 may then absorb thermal energy from the engine 46 to maintain the engine 46 within the desired temperature range during engine operation.

Additionally, the cooling system 30 may include a cab heater 66. For example, the cab heater 66 may be a heat exchange device configured to transfer heat to the cabin 14 of the off-road vehicle 10. Accordingly, warm coolant fluid 48 exiting the engine 46 may be directed toward the cab heater 66 where heat may be transferred from the coolant fluid 48 to air or another medium that may be utilized to heat or warm the cabin 14. In certain embodiments, the cab heater 66 may enhance an efficiency of the cooling system 30 by providing excess heat to the cabin 14 during cold weather rather than allowing such heat to escape to the atmosphere.

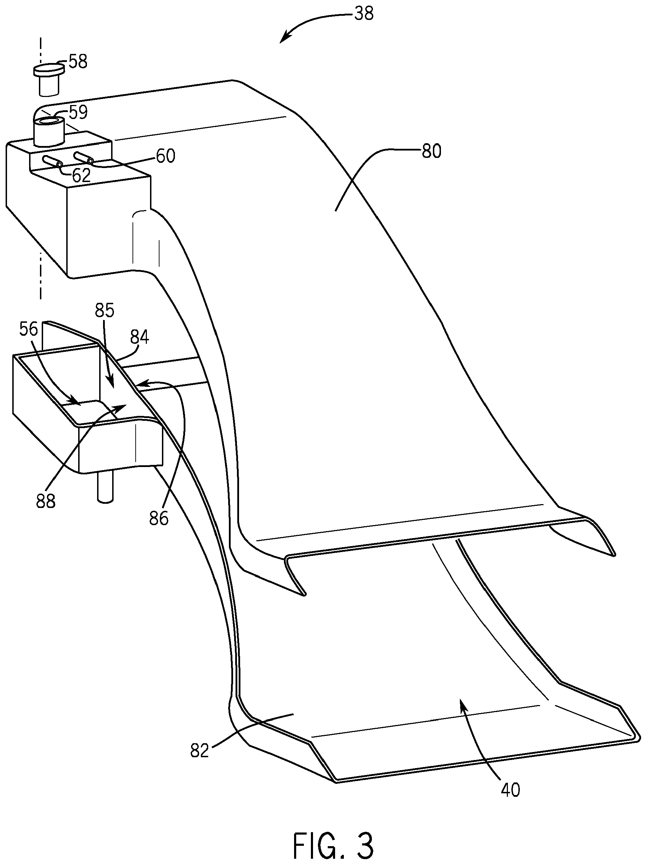

As discussed above, integrating the intake air duct (e.g., the intake compartment 40) and the deaeration chamber (e.g., the deaeration compartment 56) into a single component may establish additional space for features under the hood of the off-road vehicle 10, as well as decrease manufacturing costs of the off-road vehicle 10. For example, in certain embodiments, a single mold may be utilized to form the integrated component as opposed to utilizing two or more molds to form each component separately. In other embodiments, two molds may be utilized to form the integrated component as opposed to utilizing four or more molds to form each component separately (e.g., each component may be formed using two molds). Accordingly, fewer molds may be used to manufacture both the intake compartment 40 and the deaeration compartment 56, which may save costs as well as time (e.g., less time to mold one component than to mold two components). In certain embodiments, the integrated component may include a first portion 80 of the integrated intake and deaeration assembly 38 and a second portion 82 of the integrated intake and deaeration assembly 38, as shown in FIG. 3. For example, FIG. 3 is an exploded perspective view of the integrated intake and deaeration assembly 38 and illustrates how the integrated intake and deaeration assembly 38 may be assembled. In other embodiments, the integrated intake and deaeration assembly 38 may include a single component, and thus may not have the first portion 80 and the second portion 82 (e.g., when a single mold may be used to form the integrated intake and deaeration assembly 38)

As shown in the illustrated embodiment of FIG. 3, the first and second portions 80, 82 (e.g., first and second components) of the integrated intake and deaeration assembly 38 form the intake compartment 40 and the deaeration compartment 56. In the illustrated embodiment, the intake compartment 40 and the deaeration compartment 56 are separated by a shared wall 84. The shared wall 84 includes a section that is part of the first portion 80 of the integrated intake and deaeration assembly 38. In addition, the shared wall 84 includes a second section 85 that is part of the second portion 82 of the integrated intake and deaeration assembly 38. The first section and the second section 85 of the shared wall 84 may be configured to be substantially aligned with one another such that the shared wall 84 is substantially smooth (e.g., ends of the first section and the second section 85 of the shared wall 84 align with one another) when the first and second portions 80, 82 of the integrated intake and deaeration assembly 38 are coupled to one another.

Additionally, the shared wall 84 includes a first surface 86 that faces the intake compartment 40 and forms a portion of the intake compartment 40 (e.g., the first surface 86 of the shared wall 84 forms a portion of a wall of the intake compartment 40). Additionally, the shared wall 84 includes a second surface 88 that faces the deaeration compartment 56 and forms a portion of the deaeration compartment 56 (e.g., the second surface 88 of the shared wall 84 forms a portion of a wall of the deaeration compartment 56).

In certain embodiments, it may be desirable for the intake compartment 40 and the deaeration compartment 56 to be sealed such that fluid flow (e.g., air, coolant fluid, etc.) is blocked between the intake compartment 40 and the deaeration compartment 56. Accordingly, the first portion 80 and the second portion 82 of the integrated intake and deaeration assembly 38 (and thus the first section and the second section 85 of the shared wall 84) may be coupled to one another in a manner that facilitates a substantially fluid-tight connection. For example, in certain embodiments, the first portion 80 and the second portion 82 may be laser welded to one another. In the laser welding process, the first portion 80 and/or the second portion 82 may partially melt and re-harden, such that the first portion 80 adheres to the second portion 82, thereby establishing a seal between the portions. In other embodiments, the first portion 80 and the second portion 82 may be coupled to one another via fasteners (e.g., screws, bolts, rivets, etc.). In such embodiments, the fasteners may couple the first portion 80 and the second portion 82 to one another, while substantially eliminating gaps and/or openings between the first portion 80 and the second portion 82, thereby establishing a seal between the portions.

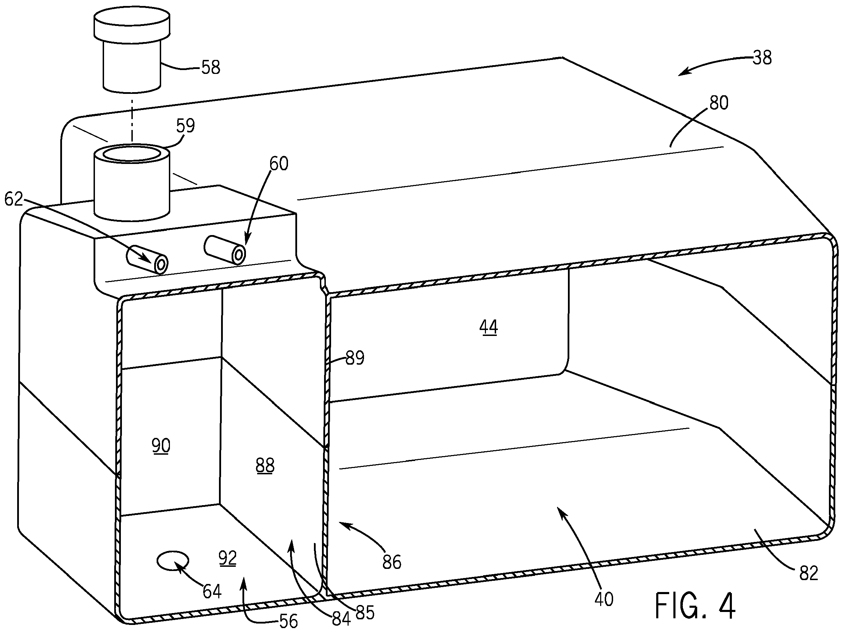

When the first portion 80 and the second portion 82 are coupled to one another, the intake compartment 40 and the deaeration compartment 56 are formed, and each compartment may be sealed from one another via a substantially fluid-tight seal between the first section and the second section 85 of the shared wall 84. For example, FIG. 4 is a cross-sectional perspective view of the integrated intake and deaeration assembly 38, in which the first portion 80 and the second portion 82 (and thus the first section and the second section 85 of the shared wall 84) are coupled to one another. As shown in the illustrated embodiment of FIG. 4, the first portion 80 and the second portion 82 form the intake compartment 40 and the deaeration compartment 56 via the shared wall 84.

In the illustrated embodiment, the intake compartment 40 includes a cross-section that is substantially rectangular. In other embodiments, the intake compartment 40 may have a cross-section that includes any suitable shape for directing air toward the engine 46 (e.g., square, circular). Additionally, the cross-section of the intake compartment 40 may be substantially uniform along a length of the intake compartment 40 (e.g., from the inlet portion 42 to the outlet portion 44). In other embodiments, the cross-section of the intake compartment 40 may vary along the length of the intake compartment 40. Further, as illustrated, the intake compartment 40 includes the outlet portion 44 that directs the air 36 toward the engine 46.

Additionally, in the illustrated embodiment of FIG. 4, the deaeration compartment 56 has a cross-section that is substantially rectangular. The rectangular cross-section forms a chamber 90 in which the coolant fluid 48 may collect. In other embodiments, the deaeration compartment 56 may include any suitable shape that may enable the coolant fluid 48 to collect in the chamber 90 and to facilitate removal of air bubbles from the coolant fluid 48. In any case, the chamber 90 enables air bubbles present within the coolant fluid 48 to separate and exit the deaeration compartment 56 via the pressure relief valve 58 (and the opening 59). For example, in certain embodiments, the pressure relief valve 58 may include a spring-loaded valve. The spring-loaded valve may be biased toward a closed position, thereby trapping separated gas inside of the deaeration component. When a pressure in the deaeration compartment 56 reaches a threshold level (e.g., as a result of gas build-up), a biasing force of the spring-loaded valve may be overcome, thereby enabling gas to be released into the atmosphere or another compartment of the off-road vehicle 10, for example. In other embodiments, the pressure relief valve 58 may include any suitable valve that may be utilized to control a flow of gas that may be released from the deaeration compartment 56.

As illustrated in FIG. 4, the deaeration compartment 56 includes the first inlet port 60 and the second inlet port 62. For example, the first inlet port 60 may be coupled to a flow path extending from the radiator 50 and configured to receive cooled coolant fluid 48 from the radiator 50. The second inlet port 62 may be coupled to the engine bypass path 55 and configured to receive the coolant fluid 48 bypassing the radiator 50. Additionally, as illustrated in the embodiment of FIG. 4, the outlet port 64 is located on a bottom surface 92 of the deaeration compartment 56. The outlet port 64 is configured to direct the coolant fluid 48 toward the pump 52, which is configured to circulate the coolant fluid 48 throughout the coolant fluid loop 34. It should be noted that in other embodiments, the outlet port 64 may be located in any suitable location in the deaeration compartment for directing the coolant fluid 48 toward the pump 52.

Furthermore, as illustrated in the embodiment of FIG. 4, the shared wall 84 extends between the intake compartment 40 and the deaeration compartment 56. The shared wall 84 is formed by aligning and coupling the first section 89 and the second section 85 of the shared wall 84. The shared wall 84 (e.g., when the first section 89 and the second section 85 are coupled to one another) includes the first surface 86 facing the intake compartment 40 and the second surface 88 facing the deaeration compartment 56. Accordingly, the shared wall 84 may substantially eliminate any gaps between the intake compartment 40 and the deaeration compartment 56. The elimination of such gaps may reduce an amount of space occupied by the integrated intake and deaeration assembly 38, as compared to a separate intake air duct and deaeration chamber. Consequently, additional components may fit under the hood of the off-road vehicle 10. Additionally or alternatively, the hood of the off-road vehicle 10 may be lowered as a result of the increased space, such that an amount of drag experienced by the off-road vehicle is reduced.

The shared wall 84 also facilitates a transfer of thermal energy between the air 36 in the intake compartment 40 and the coolant fluid 48 in the deaeration compartment 56. For example, the temperature of the coolant fluid 48 in the deaeration compartment 56 may be greater than a temperature of the air 36 in the intake compartment 40. Accordingly, thermal energy may be transferred from the coolant fluid 48 to the air 36 via the shared wall 84. The thickness of the shared wall 84 may be particularly selected to facilitate thermal energy transfer while establishing a substantially fluid-tight seal between the intake compartment 40 and the deaeration compartment 56.

In other embodiments, thermal energy transfer between the coolant fluid 48 in the deaeration compartment 56 and the air 36 in the intake compartment 40 may be undesirable because the temperature of the air 36 may increase. Accordingly, in such embodiments, the thickness of the shared wall 84 may be selected to insulate the intake compartment 40 from the deaeration compartment 56 (e.g., the thickness reduces the transfer of thermal energy between the deaeration compartment 56 and the intake compartment 56). It should be noted that while the thickness of the shared wall 84 may be increased to insulate the intake compartment 40 from the deaeration compartment 56, the thickness may still be substantially smaller than any gaps present between a separate intake air duct and deaeration chamber.

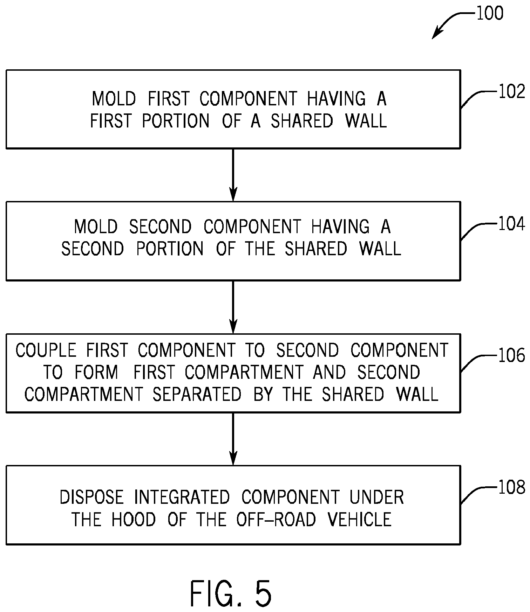

As discussed above, manufacturing the integrated intake and deaeration assembly 38 may reduce costs of manufacturing the off-road vehicle 10. For example, FIG. 5 is a flow diagram of a method 100 for manufacturing the integrated intake and deaeration assembly. At block 102, the first portion (e.g., a first component) of the integrated intake and deaeration assembly is formed (e.g., via injection molding). In certain embodiments, the first portion may be formed from a polymeric material such as polypropylene, nylon, or another suitable polymeric material. As shown in FIGS. 3 and 4, the first portion (e.g., the first component) may include the first section of the shared wall. Similarly, the second portion may include the second section of the shared wall. When the first portion and the second portion of the integrated intake and deaeration assembly are coupled to one another, the first and second sections of the shared wall are also coupled to one another to form the shared wall that separates the intake compartment and the deaeration compartment.

At block 104, the second portion (e.g., a second component) of the integrated intake and deaeration assembly is formed (e.g., via injection molding). In certain embodiments, the second portion (e.g., the second component) may be formed from a polymeric material such as polypropylene, nylon, or another suitable polymeric material.

When the first and second portions have been formed, the first and second portions (e.g., the first and second components) are coupled to one another to form the integrated intake and deaeration assembly, as shown at block 106. As discussed above, coupling the first and second portion (e.g., the first and second components) to one another forms the intake compartment (e.g., a first compartment) and the deaeration compartment (e.g., a second compartment). In certain embodiments, the first and second portions may be coupled to one another by laser welding the first portion to the second portion of the integrated intake and deaeration assembly. In other embodiments, the first and second portions (e.g., the first and second components) may be coupled to one another via fasteners (e.g., screws, bolts, rivets, etc.). In certain embodiments, the first and second portions are configured to form a substantially fluid-tight seal such that the intake compartment (e.g., the first compartment) and the deaeration compartment (e.g., the second compartment) are substantially fluidly isolated from one another (e.g., air from the intake compartment may be substantially blocked from entering the deaeration compartment, and/or coolant fluid from the deaeration compartment may be substantially blocked from entering the intake compartment).

At block 108, the integrated intake and deaeration assembly is disposed underneath the hood of the off-road vehicle. As discussed above, the integrated intake and deaeration assembly may reduce an amount of space occupied under the hood, as compared to a separate intake air duct and deaeration chamber. Accordingly, additional components may be included underneath the hood of the off-road vehicle. Additionally or alternatively, the hood of the off-road vehicle 10 may be lowered as a result of the increased space, such that an amount of drag experienced by the off-road vehicle is reduced.

While only certain features of the present disclosure have been illustrated and described herein, many modifications and changes will occur to those skilled in the art.

## Claims

1. An integrated intake and deaeration assembly (38) comprising:
a first compartment (40);
a second compartment (56); and
a shared wall (84);
wherein the shared wall (84) separates the first compartment (40) from the second compartment (56), the first compartment (40) is configured to direct a flow of air (36) to an engine (46) of a work vehicle (10); **characterized in that** the integrated intake and deaeration assembly (38) comprises a pressure relief valve (58), and the second compartment is configured to deaerate a coolant fluid (48) through said pressure relief valve (58) and **in that** the second compartment (56) comprises
a first inlet port (60) configured for enabling coolant fluid (48) to enter the second compartment (56) from a radiator (50) of said work vehicle (10), and
a second inlet port (62) configured for enabling coolant fluid (48) to enter the second compartment (56) from the engine (46) of said work vehicle (10).

2. The integrated intake and deaeration assembly of claim 1, comprising a first component (80) and a second component (82) configured to form the first compartment (40) and the second compartment (56) when the first component and the second component are coupled to one another.

3. The integrated intake and deaeration assembly of claim 2, wherein the first component (80) and the second component (82) are configured to be coupled to one another via a laser weld, or an ultrasonic weld, or an adhesive, or a fastener, or any combination thereof.

4. The integrated intake and deaeration assembly of claim 2, wherein the first component (80), the second component (82), or any combination thereof, is formed from a material comprising polypropylene.

5. The integrated intake and deaeration assembly of claim 2, wherein the first component (80) and the second component (82) are configured to block a flow of the air and the coolant fluid between the first compartment and the second compartment, while the first and second components are coupled to one another.

6. The integrated intake and deaeration assembly of claim 1, wherein the integrated intake and deaeration assembly are configured to fit under a hood of the work vehicle.

7. The integrated intake and deaeration assembly of claim 1, wherein the shared wall (84) is configured to transfer heat between the first (40) and second compartments (56).

8. The integrated intake and deaeration assembly of claim 1, wherein the second compartment (56) is configured to be positioned upstream of a pump of the work vehicle such that the pump receives the coolant fluid substantially free of air bubbles.

9. The integrated intake and deaeration assembly of claim 1, wherein the second compartment (56) includes an outlet port (64) configured to be coupled to a pump of the work vehicle such that the pump receives the coolant fluid substantially free of air bubbles and directs the coolant fluid toward the engine.

10. A work vehicle comprising
a radiator
an engine
a thermostat
an integrated intake and deaeration assembly according to any of the preceding claims
a pump for circulating a cooling fluid through the radiator, the engine and said assembly.

## Patentansprüche

1. Integrierte Einlass- und Entlüftungsanordnung (38), umfassend:
ein erstes Abteil (40);
ein zweites Abteil (56); und
eine gemeinsame Wand (84);
wobei die gemeinsame Wand (84) das erste Abteil (40) von dem zweiten Abteil (56) trennt, wobei das erste Abteil (40) dazu eingerichtet ist, einen Luftstrom (36) zu einem Motor (46) eines Nutzfahrzeuges (10) zu leiten; **dadurch gekennzeichnet, dass** die integrierte Einlass- und Entlüftungsanordnung (38) ein Überdruckventil (58) umfasst und das zweite Abteil dazu eingerichtet ist,
eine Kühlflüssigkeit (48) durch das Überdruckventil (58) zu entlüften, und dass das zweite Abteil (56) umfasst:
einen ersten Einlasskanal (60), der dazu eingerichtet ist, es zu ermöglichen, dass Kühlflüssigkeit (48) von einem Kühler (50) des Nutzfahrzeuges (10) in das zweite Abteil (56) eintreten kann, und
einen zweiten Einlasskanal (62), der dazu eingerichtet ist, es zu ermöglichen, dass Kühlflüssigkeit (48) von dem Motor (46) des Nutzfahrzeuges (10) in das zweite Abteil (56) eintreten kann.

2. Integrierte Einlass- und Entlüftungsanordnung nach Anspruch 1, umfassend eine erste Komponente (80) und eine zweite Komponente (82), die dazu ausgestaltet sind, das erste Abteil (40) und das zweite Abteil (56) zu bilden, wenn die erste Komponente und die zweite Komponente miteinander verbunden sind.

3. Integrierte Einlass- und Entlüftungsanordnung nach Anspruch 2, wobei die erste Komponente (80) und die zweite Komponente (82) dazu ausgestaltet sind, über eine Laserschweißnaht oder eine Ultraschallschweißnaht oder einen Klebstoff oder ein Befestigungsmittel oder eine Kombination davon miteinander verbunden zu sein.

4. Integrierte Einlass- und Entlüftungsanordnung nach Anspruch 2, wobei die erste Komponente (80), die zweite Komponente (82) oder eine Kombination davon aus einem Material gebildet ist, das Polypropylen umfasst.

5. Integrierte Einlass- und Entlüftungsanordnung nach Anspruch 2, wobei die erste Komponente (80) und die zweite Komponente (82) dazu eingerichtet sind, einen Strom der Luft und der Kühlflüssigkeit zwischen dem ersten Abteil und dem zweiten Abteil zu blockieren, während die erste und zweite Komponente miteinander verbunden sind.

6. Integrierte Einlass- und Entlüftungsanordnung nach Anspruch 1, wobei die integrierte Einlass- und Entlüftungsanordnung so ausgebildet ist, dass sie unter eine Motorhaube des Nutzfahrzeuges passt.

7. Integrierte Einlass- und Entlüftungsanordnung nach Anspruch 1, wobei die gemeinsame Wand (84) so ausgebildet ist, dass sie Wärme zwischen dem ersten (40) und dem zweiten Abteil (56) überträgt.

8. Integrierte Einlass- und Entlüftungsanordnung nach Anspruch 1, wobei das zweite Abteil (56) so eingerichtet ist, dass es stromaufwärts von einer Pumpe des Nutzfahrzeuges angeordnet ist, sodass die Pumpe die Kühlflüssigkeit im Wesentlichen frei von Luftblasen erhält.

9. Integrierte Einlass- und Entlüftungsanordnung nach Anspruch 1, wobei das zweite Abteil (56) einen Auslasskanal (64) umfasst, der dazu eingerichtet ist, mit einer Pumpe des Nutzfahrzeuges verbunden zu sein, sodass die Pumpe die Kühlflüssigkeit im Wesentlichen frei von Luftblasen erhält und die Kühlflüssigkeit in Richtung des Motors leitet.

10. Nutzfahrzeug umfassend
einen Kühler,
einen Motor,
ein Thermostat,
eine integrierte Einlass- und Entlüftungsanordnung nach einem der vorangehenden Ansprüche,
eine Pumpe zum Zirkulieren einer Kühlflüssigkeit durch den Kühler, den Motor und die Anordnung.

## Revendications

1. Ensemble d'admission et de désaération intégré (38) comprenant :
un premier compartiment (40) ;
une deuxième compartiment (56) ; et
une paroi commune (84) ;
dans lequel la paroi commune (84) sépare le premier compartiment (40) du deuxième compartiment (56), le premier compartiment (40) est configuré pour acheminer un flux d'air (36) vers un moteur (46) d'un engin de travail (10) ; **caractérisé en ce que** l'ensemble d'admission et de désaération intégré (38) comprend un clapet de décharge (58), et le deuxième compartiment est configuré pour désaérer un fluide réfrigérant (48) à travers ledit clapet de décharge (58) et **en ce que** le deuxième compartiment (56) comprend
un premier port d'entrée (60) configuré pour permettre au fluide réfrigérant (48) d'entrer dans le deuxième compartiment (56) à partir d'un radiateur (50) dudit engin de travail (10), et
un deuxième port d'entrée (62) configuré pour permettre au fluide réfrigérant (48) d'entrer dans le deuxième compartiment (56) à partir du moteur (46) dudit engin de travail (10).

2. Ensemble d'admission et de désaération intégré selon la revendication 1, comprenant un premier composant (80) et un deuxième composant (82) configurés pour former le premier compartiment (40) et le deuxième compartiment (56) lorsque le premier composant et le deuxième composant sont couplés l'un à l'autre.

3. Ensemble d'admission et de désaération selon la revendication 2, dans lequel le premier composant (80) et le deuxième composant (82) sont configurés pour être couplés l'un à l'autre par le biais d'une soudure au laser, d'une soudure à ultrasons, d'un adhésif, d'une fixation, ou de toute combinaison de ceux-ci.

4. Ensemble d'admission et de désaération intégré selon la revendication 2, dans lequel le premier composant (80), le deuxième composant (82), ou l'une quelconque des combinaisons de ceux-ci, est constitué(e) d'un matériau comprenant du polypropylène.

5. Ensemble d'admission et de désaération selon la revendication 2, dans lequel le premier composant (80) et le deuxième composant (82) sont configurés pour bloquer un flux d'air et du fluide réfrigérant entre le premier compartiment et le deuxième compartiment, lorsque les premier et deuxième composant sont couplés l'un à l'autre.

6. Ensemble d'admission et de désaération selon la revendication 1, dans lequel l'ensemble d'admission et de désaération intégré est configuré pour être placé sous le capot de l'engin de travail.

7. Ensemble d'admission et de désaération intégré selon la revendication 1, dans lequel la paroi commune (84) est configurée pour transférer de la chaleur entre les premier (40) et deuxième compartiments (56).

8. Ensemble d'admission et de désaération selon la revendication 1, dans lequel le deuxième compartiment (56) est configuré pour être positionné en amont de la pompe de l'engin de travail de manière à ce que la pompe reçoive le fluide réfrigérant sensiblement dépourvu de bulles d'air.

9. Ensemble d'admission et de désaération selon la revendication 1, dans lequel le deuxième compartiment (56) comprend un port de sortie (64) configuré pour être relié à la pompe de l'engin de travail de manière à ce que la pompe reçoive le fluide réfrigérant sensiblement dépourvu de bulles d'air et achemine le fluide réfrigérant vers le moteur.

10. Engin de travail comprenant
un radiateur
un moteur
un thermostat
un ensemble d'admission et de désaération intégré selon l'une quelconque des revendications précédentes
une pompe permettant la circulation du fluide réfrigérant dans le radiateur, le moteur et ledit ensemble.
